# EUROPÄISCHE PATENTANMELDUNG

(11) **EP 0 800 004 A1**
(43) Veröffentlichungstag der Anmeldung: **08.10.1997**
(21) Anmeldenummer: 97102932.7
(22) Anmeldetag: 22.02.1997
(51) Int. Cl.: F15B 15/22, F15B 15/14

(54) **Werkzeugmachine sowie Verfahren zu deren Ansteuerung**

(30) Priorität: 02.04.1996 DE 19613128
(71) Anmelder: CHIRON-WERKE GMBH & CO. KG, 78532 Tuttlingen (DE)
(72) Erfinder: Grund, Peter, Dr., 78647 Trossignen (DE)
(74) Vertreter: Otten, Hajo, Dr.-Ing.

(57) **Zusammenfassung**

Eine Werkzeugmaschine (1) umfaßt eine Vorrichtung (3), die durch eine Kolben-Zylinder-Einheit (10) betätigbar ist, die einen einen durch Endanschläge begrenzten Hub (15) ausführenden, mediumsbetätigten Kolben (12) umfaßt, der mit einem Abtriebsglied (13) zur Übertragung des Hubes (15) auf die zu betätigende Vorrichtung (3) verbunden ist. Es ist eine Dämpfungsvorrichtung vorgesehen, die einen Gegendruck zum gezielten Abbremsen des sich bewegenden Kolbens (12) aufbaut, so daß dieser bei Annäherung an zumindest einen der Endanschläge in seiner Bewegung bedämpft wird.

## Beschreibung

Die vorliegende Erfindung betrifft eine Werkzeugmaschine mit einer Vorrichtung, die durch eine Kolben-Zylinder-Einheit betätigbar ist, die einen einen durch Endanschläge begrenzten Hub ausführenden, mediumsbetätigten Kolben umfaßt, der mit einem Abtriebsglied zur Übertragung des Hubes auf eine zu betätigende Vorrichtung verbunden ist.

Die Erfindung betrifft ferner ein Verfahren zum Betreiben und Ansteuern einer derartigen Werkzeugmaschine mit dem Schritt:
a) Beaufschlagen einer Stirnseite des Kolbens mit einem Betätigungsmedium, so daß der Kolben einen Hub ausführt.

Derartige Werkzeugmaschinen sind allgemein bekannt, die an ihnen befindlichen Vorrichtungen dienen z.B. zum Betätigen von Gelenkarmen der Werkzeugwechsler, zum Verdrehen eines Werkstücktisches, zum Öffnen und Schließen von Türen in der Verkleidung der Werkzeugmaschine, zum Bewegen von Spritzschutz- oder Mittentrennwänden etc.

Die Kolben der zur Betätigung dieser Vorrichtungen vorgesehenen Kolben-Zylinder-Einheiten sind entweder doppelt- oder einfachwirkende Kolben, die in der Regel gegen Endanschläge laufen, durch die die Hubbewegung begrenzt wird. An diesen Endanschlägen sind teilweise Stoßdämpfer vorgesehen, die den sich bewegenden Kolben sowie die mit ihm verbundene Vorrichtung abfangen und dabei die Bewegungsenergie des Kolbens sowie der mitbewegten Teile der Vorrichtung vernichten.

Das allgemeine Bestreben z.B. in der Maschinenbau-Industrie geht dahin, sämtliche Arbeitsvorgänge an den Werkzeugmaschinen in immer kürzeren Zeitabständen durchzuführen, so daß das Durchführen des Hubes der Kolben-Zylinder-Einheit sowie die damit einhergehende Bewegung der entsprechenden Teile der betätigten Vorrichtung in möglichst kurzer Zeit erfolgen kann. Eine derartige, sehr schnelle Bewegung bedeutet jedoch, daß der Kolben mit einer hohen Geschwindigkeit gegen die Anschläge läuft, so daß es zu harten Stößen und Erschütterungen kommt. Derartige Stöße und Erschütterungen sind jedoch im Hinblick auf die Arbeitsgenauigkeit der Werkzeugmaschine von Nachteil, da es durch diese Erschütterungen zu Dejustierungen kommen kann, so daß die Reproduzierbarkeit der Bearbeitung beeinträchtigt wird.

Insbesondere dann, wenn die durch die Kolben-Zylinder-Einheit bewegten Massen der betätigten Vorrichtung sehr groß sind, müssen bei entsprechenden Verstellgeschwindigkeiten in den Endlagen des Kolbens relativ hohe Bewegungsenergien vernichtet werden, wozu Stoßdämpfer vorgesehen sind. Wegen der hohen zu vernichtenden Bewegungsenergien sind diese Stoßdämpfer sehr ausladend, so daß sie die üblichen konstruktiven Nachteile aufweisen.

Allgemein muß beim Betrieb der Kolben-Zylinder-Einheiten immer ein Kompromiß zwischen der erzielten Hubgeschwindigkeit des Kolbens sowie den sich daraus ergebenden Bewegungsenergien gefunden werden, die durch Endanschläge und ggf. Stoßdämpfer vernichtet werden müssen.

Insbesondere tauchen Probleme auf, wenn die Vorrichtung eine Werkzeugwechselvorrichtung ist. Derartige Werkzeugwechselvorrichtungen dienen dazu, die bei einer derartigen Werkzeugmaschine verwendeten Werkzeuge zwischen einer Magazinstellung und einer Arbeitsstellung an der Spindel zu überführen, sie ermöglichen also in an sich bekannter Weise einen automatischen Werkzeugwechsel. Die Werkzeugwechselvorrichtungen umfassen dabei z.B. Parallelogrammführungen oder andere Gelenkhebel, die durch die Kolben-Zylinder-Einheiten bewegt werden. Dabei kommen sehr unterschiedliche Werkzeuge zum Einsatz, die unterschiedlich schwer sind. Zum einen ist es hier bekannt, die Werkzeugwechselvorrichtungen mit einer Standardgeschwindigkeit zu betreiben, wobei dann die Geschwindigkeit so gewählt wird, daß auch bei den schwersten Werkzeugen noch eine hinreichende Dämpfung der Bewegungsabläufe möglich ist. Dies bedeutet jedoch andererseits, daß die leichteren Werkzeuge nicht so schnell bewegt werden, wie dies möglich wäre.

Andererseits kann auch mit zwei unterschiedlichen Geschwindigkeiten gearbeitet werden, so daß die leichteren Werkzeuge schneller bewegt werden als die schwereren. Dies bedeutet jedoch, daß durch aufwendige Programmierung oder sonstige Werkzeugerkennungen dafür Sorge getragen werden muß, daß die Werkzeugwechselvorrichtung jeweils mit der "richtigen" Geschwindigkeit angesteuert wird.

Gerade die Werkzeugwechselgeschwindigkeit bestimmt jedoch maßgeblich die Bearbeitungsgeschwindigkeit der Werkzeugmaschinen, wobei hier bereits Zeitvorteile im Bereich von 1/10 Sekunde Verbesserungen darstellen, deren wirtschaftliche und technische Bedeutung enorm sind.

Vor diesem Hintergrund ist es Aufgabe der vorliegenden Erfindung, die eingangs genannte Werkzeugmaschine sowie das Verfahren derart weiterzubilden, daß bei einfachem Aufbau eine schnelle Bewegung von Massen möglich ist. Ferner soll die entsprechende Vorrichtung so ausgelegt sein, daß sie an verschiedene Belastungen und verschiedene zu betätigende Massen leicht angepaßt werden kann. Dabei soll das eingangs erwähnte Verfahren derart weitergebildet werden, daß bei konstruktiv einfachem Aufbau eine größere Bewegungsgeschwindigkeit der bewegten Massen möglich wird.

Bei der eingangs erwähnten Werkzeugmaschine wird diese Aufgabe dadurch gelöst, daß zumindest eine Dämpfungsvorrichtung vorgesehen ist, die einen Gegendruck zum gezielten Abbremsen des sich bewegenden Kolbens aufbaut, so daß dieser bei Annäherung an zumindest einen der Endanschläge in seiner Bewegung bedämpft wird.

Bei dem eingangs genannten Verfahren wird diese Aufgabe dadurch gelöst, daß die Bewegung des Kolbens bei dessen Annäherung an den jeweiligen Endanschlag durch Erzeugen eines Gegendruckes zum gezielten Abbremsen des sich bewegenden Kolbens bedämft wird.

Die der Erfindung zugrunde liegende Aufgabe wird auf diese Weise vollkommen gelöst. Durch das gezielte Abbremsen des sich bewegenden Kolbens ist ein besonders weiches Abfangen der Hubbewegung möglich, so daß zur Anpassung an unterschiedliche zu bewegende Massen die Hubgeschwindigkeit z.B. durch einen größeren Druck des Betätigungsmediums vergrößert werden kann, ohne daß es in den Endlagen zu härteren Stößen kommt, da hier der Kolben ja gezielt abgebremst wird. Dieses Abbremsen läßt sich konstruktiv besonders einfach dadurch bewerkstelligen, daß auf der jeweils nicht angeschobenen Seite des Kolbens ein Gegendruck aufgebaut wird, der z.B. kurz vor Erreichen der Endlage des Kolbens relativ schnell auf einen hohen Wert erhöht wird, so daß ein Großteil der Bewegungsenergie vernichtet wird, ohne daß größere Stoßdämpfer verwendet werden müssen. Danach wird der Gegendruck dann gezielt abgebaut, so daß dieser in etwa vollständig zurückgegangen ist, wenn der Kolben den Endanschlag erreicht, so daß ein "Prellen" vermieden wird.

Dabei ist es bevorzugt, wenn der Gegendruck einen gesteuerten Druckverlauf aufweist, also bei dem neuen Verfahren an der dem jeweiligen Endanschlag zugewandten Stirnseite des Kolbens der Gegendruck zum gezielten Abbremsen gesteuert auf- und wieder abgebaut wird.

Hier ist von Vorteil, daß durch den gesteuerten Druckverlauf, also z.B. das gezielte Auf- und wieder Abbauen des Gegendruckes ein besonders effizientes Abbremsen des Kolbens während des letzten kurzen Weges seines Hubes möglich wird, so daß auch ohne Einsatz großer Stoßdämpfer insgesamt eine sehr schnelle Durchführung des Hubes gewährleistet ist, ohne daß es beim Abbremsen zu harten Stößen oder zum Prellen kommt.

Bei der neuen Werkzeugmaschine ist es dabei bevorzugt, wenn an der dem zumindest einen Endanschlag zugewandten Stirnseite des Kolbens zumindest eine Druckkammer vorgesehen ist, die über ein Ventil entlüftbar ist, das den gesteuerten Gegendruck erzeugt.

Diese Maßnahme ist konstruktiv von Vorteil, denn der Kolben bewegt sich sozusagen bei der Durchführung seines Hubes in die Druckkammer hinein, so daß das darin befindliche Betätigungsmedium durch die Bewegung des Kolbens komprimiert wird, wodurch der Gegendruck aufgebaut wird. Durch das weiter vorgesehene Ventil wird jetzt der Verlauf des Gegendruckes gezielt gesteuert, so daß z.B. erst gegen Ende der Bewegung des Kolbens ein Gegendruck aufgebaut wird.

Bei dem neuen Verfahren ist es bevorzugt, wenn der Gegendruck bis zu einem bestimmten Wert aufgebaut wird, der beibehalten wird, bis der Kolben den Endanschlag erreicht hat, und dann wieder abgebaut wird.

Hier ist von Vorteil, daß in Abhängigkeit von der zu bewegenden Masse ein Gegendruck festgelegt werden kann, der im Zusammenwirken mit dem verbleibenden restlichen Wegbereich des Hubes ausreicht, um die Bewegungsenergie so zu vernichten, daß der Kolben den Endanschlag nahezu stoßfrei erreicht. Selbstverständlich muß der Gegendruck dann abgebaut werden, wenn der Kolben den Endanschlag erreicht hat, damit das System auch druckfrei in der entsprechenden Endlage verbleibt.

Diese Vorteile werden konstruktiv in bevorzugter Weise dadurch erreicht, daß das Ventil ein Drosselventil ist, das entweder bei Erreichen eines Öffnungsdruckes bzw. einer bestimmten Stellung des Kolbens die Druckkammer vorzugsweise automatisch entlüftet oder aber mit konstantem Drosselquerschnitt arbeitet.

Diese Maßnahmen sind konstruktiv von Vorteil, denn zum einen wird durch das automatische Öffnen der gesteuerte Gegendruck sozusagen automatisch aufgebaut und dann wieder abgebaut, bzw. nach oben begrenzt, so daß gesonderte Steuereinrichtungen dafür nicht erforderlich sind. Das Öffnen des Ventiles kann alternativ auch vom Kolbenhub abhängig sein, was z.B. durch geeignete Meßglieder erfaßt werden kann.

Bei dem konstanten Drosselquerschnitt ist dagegen von Vorteil, daß ein konstruktiv sehr einfaches Ventil eingesetzt werden kann. Da dieses Ventil sozusagen immer geöffnet ist, ergibt sich eine konstante Abfuhr der Abluft oder des entweichenden Druckmediums, also ein kontinuierliche Entlüftung/Entleerung des entsprechenden Druckraumes, wobei die Geschwindigkeit des Druckauf- und Abbaues maßgeblich durch den Drosselquerschnitt bestimmt wird. Weil dieses Drosselventil keine bewegten Teile aufweist, ist es nicht nur preiswert, sondern auch sehr betriebssicher.

Insgesamt ist es bevorzugt, wenn der Kolben ein doppeltmediumsbetätigter Kolben ist, an dessen beiden Stirnseiten jeweils eine Druckkammer angeordnet ist, die wahlweise und abwechselnd zum Vorschub bzw. zum Aufbau des gesteuerten Gegendruckes dienen, wobei vorzugsweise jede Druckkammer einen Ein- und Auslaß aufweist, der vorzugsweise über eine Umschaltvorrichtung wahlweise mit einer Mediumsquelle oder einem Ventil zur Entlüftung/Entleerung der Druckkammer verbindbar ist.

Bei dieser Maßnahme ist von Vorteil, daß zum einen der Kolben seinen Hub in beiden Richtungen aktiv durchführt, also nicht durch äußere Federkräfte oder ähnliche Energiespeicher in seine Ausgangslage zurückbewegt werden muß. Dies führt zu einem schnelleren Arbeitsablauf der durch die neue Kolben-Zylinder-Einheit zu betätigenden Vorrichtung. Weiter ist dabei konstruktiv von Vorteil, daß eine einzige Mediumsquelle sowie ein einziges Entlüftungsventil verwendet werden können, die über die Umschaltvorrichtung wahlweise mit der einen oder der anderen Druckkammer verbunden werden. Durch das Umschalten der Umschaltvorrichtung wird dabei dann auf einfache Weise für den Hin- oder den Rückhub des Kolbens gesorgt, wobei automatisch auch die Endlagenbedämpfung bewerkstelligt wird, die durch die Wirkung des Ventiles gesteuert ist.

Allgemein ist es bevorzugt, wenn zumindest ein Hilfskolben vorgesehen ist, der zu Beginn des Hubes auf eine Stirnseite des Kolbens einwirkt und einen kürzeren Hub als dieser durchführt.

Diese Maßnahme ist konstruktiv von Vorteil, denn durch den Hilfskolben wird auf einfache Weise dafür gesorgt, daß der Kolben zu Beginn der Hubbewegung mit einer höheren Vorschubkraft als während des restlichen Hubes beaufschlagt wird. Durch diese sogenannte Startbeschleunigung mit einer höheren Vorschubkraft kann jetzt zunächst die träge Masse der zu bewegenden Teile überwunden werden, bevor dann mit der üblichen Vorschubkraft durch den Kolben die restliche Bewegung durchgeführt wird. Diese anfänglich höhere Vorschubkraft sorgt damit für ein deutlich schnelleres Verfahren des Kolbens zwischen seinen beiden Endstellungen. Es ist dabei möglich, die Beaufschlagung des Kolbens derart zu wählen, daß anfänglich eine hohe Vorschubkraft, während des mittleren Hubes eine übliche Vorschubkraft und zum Ende des Hubes hin eine geringere Vorschubkraft ausgeübt wird, so daß schon die übliche Dämpfung ausreicht, den Kolben in seinen Endlagen abzubremsen. Durch die neue Dämpfungsvorrichtung ist es jedoch sogar möglich, den Kolben mit höherer Geschwindigkeit gegen den Endanschlag zu fahren, wo er dann auf die oben beschriebene Weise bedämpft wird, so daß es nicht zu einem Schlagen oder Prellen kommt.

Diese gesamten Maßnahmen führen also auf konstruktiv einfache Weise dazu, daß der Kolben schneller verfahren werden kann, ohne daß es zu den aus dem Stand der Technik bekannten nachteiligen Wirkungen wie Prellen oder harten Stößen kommt.

Dabei ist es bevorzugt, wenn zu beiden Seiten des Kolbens jeweils ein Hilfskolben vorgesehen ist, dessen Kolbenstange mit einer zugeordneten Stirnseite des Kolbens in Anlage bringbar ist, wobei der Hilfskolben vorzugsweise eine größere Kolbenfläche aufweist als der Kolben selbst.

Auch diese Maßnahme ist konstruktiv von Vorteil, es werden sozusagen zwei hintereinandergeschaltete Kolben verwendet, wobei der Hilfskolben wegen seiner größeren Kolbenfläche bei gleichem Mediumsdruck eine größere Schubkraft auf den Kolben ausübt, als dies durch das Medium selbst erfolgt. Da der Hub des Hilfskolbens deutlich kürzer ist als der Hub des Kolbens, wirkt die zusätzliche Schubkraft durch den Hilfskolben nur während eines anfänglichen Abschnittes des Hubes des Kolbens, so daß auf konstruktiv verblüffend einfache Weise dafür gesorgt wird, daß während der Hubbewegung des Kolbens zunächst eine größere Vorschubkraft und dann nur noch die übliche Vorschubkraft wirkt.

Dabei ist es weiter bevorzugt, wenn der Hilfskolben ein doppeltmediumsbetätigter Hilfskolben ist, an dessen beiden Stirnseiten jeweils eine Druckkammer vorgesehen ist, die wahlweise und abwechselnd zum Vorschub sowie vorzugsweise zum Aufbau eines gesteuerten Gegendruckes dient, um den Hilfskolben bei Annäherung an zumindest eine seiner Endlagen in seiner Bewegung zu bedämpfen.

Hier ist von Vorteil, daß nicht nur der Kolben, sondern zusätzlich auch noch der Hilfskolben, gezielt bedämpft wird, so daß sich insgesamt eine noch höhere Verstellgeschwindigkeit realisieren läßt, da auch hohe Bewegungsenergien durch das Zusammenwirken der Dämpfungen an Kolben und Hilfskolben vernichtet werden können.

Weiter ist es bevorzugt, wenn jede Druckkammer einen Ein- bzw. Auslaß für das Betätigungsmedium aufweist und wenn für Hin- und Rückhubrichtung jeweils die dem Vorschub dienenden Druckkammern von Kolben und jeweiligem Hilfskolben sowie die dem Rückhub dienende Druckkammer des jeweils anderen Hilfskolbens druckmäßig miteinander verbunden sind.

Auch diese Maßnahme ist konstruktiv von Vorteil, es muß lediglich noch an einer Stelle Druck in die Kolben-Zylinder-Einheit eingeleitet werden, der dann den Kolben sowie den Hilfskolben in Schubrichtung beaufschlagt und gleichzeitig den anderen Hilfskolben ebenfalls aktiv bewegt, so daß dessen Masse nicht durch die zum Vorschub verwendeten Kolbenseiten mit bewegt werden muß. Dadurch wird die insgesamt zu bewegende träge Masse zumindest um die Masse des anderen Hilfskolbens reduziert, so daß die zu vernichtende Energie in den Endlagen verringert ist, was nun andererseits wiederum bei gleichem Betätigungsdruck eine höhere Verstellgeschwindigkeit des Kolbens ermöglicht.

Dabei ist es bevorzugt, wenn die druckmäßig miteinander verbundenen Druckkammern für Hinhub einerseits und Rückhub andererseits mit einer Umschaltrichtung verbunden sind, die wahlweise und abwechselnd die einen Druckkammern mit einer Mediumsquelle und die anderen mit einem Ventil zur gesteuerten Entlüftung verbindet.

Hier ist weiter von Vorteil, daß die Umschaltvorrichtung nicht nur für den Vorschub, sondern gleichzeitig auch noch für das gezielte Abbremsen von Kolben und Hilfskolben in den jeweiligen Endlagen sorgt, indem die jeweils nicht zum Vorschub verwendeten Druckkammern über das Ventil entlüftet/entleert werden, wobei hier das oben erwähnte Drosselventil zum Einsatz kommt. Auf diese konstruktiv einfache Weise ist es also möglich, lediglich durch Umschalten der Umschaltvorrichtung sowohl für eine schnelle Startbeschleunigung des Kolbens als auch für ein gezieltes Abbremsen des Kolbens in seiner Endlage zu sorgen.

Insgesamt ermöglicht es insbesondere die Kombination von Hilfskolben und gesteuertem Gegendruck zum gezielten Abbremsen, daß auch bei großen zu bewegenden Massen ein schnelles Verfahren oder Verstellen dieser Massen möglich ist, ohne daß die damit verbundenen hohen Bewegungsenergien dazu führen, daß beim Anlaufen der Endanschläge unzulässige Erschütterungen oder Stöße auftreten, die nicht nur die Arbeitsgenauigkeit der betätigten Vorrichtung, sondern auch die Lebensdauer sowie die Funktionsgenauigkeit der Kolben-Zylinder-Einheit negativ beeinträchtigen würden.

Bei der neuen Werkzeugmaschine sowie dem Verfahren zu ihrem Betreiben oder Ansteuern ist allgemein von Vorteil, daß träge Massen zwischen zwei Endlagen möglichst schnell und stoßfrei hin- und hergewegt werden können. Da das Abbremsen durch die sowieso zum Vorschub in die jeweils andere Richtung vorgesehene Druckkammer erfolgen kann, baut die neue Kolben-Zylinder-Einheit sehr schmal, so daß sie an der Werkzeugmaschine auch dort eingesetzt werden kann, wo Raumbedarf ein wichtiges Entwurfskriterium ist. Weiter ist von Vorteil, daß keine im Dauerbetrieb ermüdenden Druckfedern oder sonstige Stoßdämpfer erforderlich sind, um das weiche Abfangen der bewegten Massen in den Endlagen zu realisieren. Hierdurch erhöht sich nicht nur die Betriebssicherheit, sondern auch die Lebensdauer der neuen Werkzeugmaschine erheblich.

Wegen dieser Vorteile kann die Kolben-Zylinder-Einheit auch allgemein als Aktuator eingesetzt werden, sie ist nicht auf Werkzeugmaschinen beschränkt.

Wenn die Vorrichtung eine Werkzeugwechselvorrichtung ist, durch die Werkzeuge zwischen einer Magazinstellung und einer Arbeitsstellung an einer Spindel überführbar sind, so ergibt sich hier insgesamt der Vorteil, daß der Werkzeugwechsel auch bei schwereren Werkzeugen sehr schnell durchgeführt werden kann, ohne daß es durch harte Schläge oder durch Prellen zu einer Dejustierung der Werkzeugmaschine kommt. Durch die erfindungsgemäßen Maßnahmen lassen sich bei der neuen Werkzeugmaschine also weitere Zeitvorteile beim Werkzeugwechsel erzielen.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ausführungsbeispiele der Erfindung sind in der beigefügten Zeichnung dargestellt und werden in der nachfolgenden Beschreibung näher erläutert. Es zeigen:
- Fig. 1: einen schematischen Ausschnitt der neuen Werkzeugmaschine, der eine durch eine Kolben-Zylinder-Einheit betätigte Werkzeugwechselvorrichtung zeigt;
- Fig. 2: in einer schematischen Darstellung die Kolben-Zylinder-Einheit aus Fig. 1 in einem Längsschnitt; und
- Fig. 3: in einer Darstellung wie Fig. 2 ein zweites Ausführungsbeispiel der Kolben-Zylinder-Einheit.

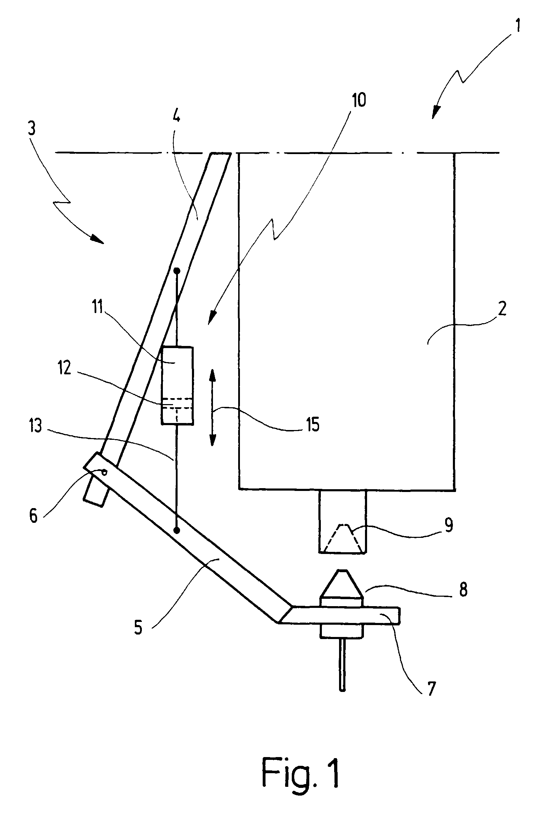

In Fig. 1 ist mit 1 eine lediglich schematisch und im Ausschnitt angedeutete Werkzeugmaschine bezeichnet, die einen schematisch angedeuteten Spindelstock 2 umfaßt. Neben dem Spindelstock 2 ist eine an sich bekannte Vorrichtung 3 zum Werkzeugwechsel angeordnet, deren oberer Arm 4 in nicht dargestellter Weise höhenverschiebbar an der Werkzeugmaschine 1 befestigt ist. Die Vorrichtung 3 weist einen unteren Arm 5 auf, der an einem Drehgelenk 6 verschwenkbar an dem oberen Arm 4 angelenkt ist. Der untere Arm 5 endet in einer Greiferhand 7, die ein Werkzeug 8 trägt, das mit einem Steilkegel eines Werkzeughalters in eine Werkzeugaufnahme 9 an dem Spindelstock 2 einsetzbar ist.

Zwischen dem oberen Arm 4 und dem unteren Arm 5 ist eine Kolben-Zylinder-Einheit 10 angeordnet, die zur Betätigung der Vorrichtung 3 dient. Die Kolben-Zylinder-Einheit 10 umfaßt einen in einem Gehäuse 11 geführten, doppelt wirkenden, mediumsbetätigten Kolben 12, der über ein Abtriebsglied 13 mit dem unteren Arm 5 verbunden ist. Das Gehäuse 11 selbst ist mit dem oberen Arm 4 verbunden.

In Abhängigkeit von der Beaufschlagung mit Betätigungsmedium führt der Kolben 12 einen bei 15 angedeuteten Hub aus, über den der untere Arm 5 auf den oberen Arm 4 zu oder von diesem weg geschwenkt wird. Um Kollisionen mit dem Spindelstock 2 zu vermeiden, kann auch der obere Arm 4 in geeigneter Weise geschwenkt werden. Andererseits ist es auch möglich, eine an sich bekannte Parallelogrammführung zu verwenden, durch die die Greiferhand 7 automatisch aus dem Bereich des Spindelstockes 2 herausbewegt wird, wenn die Kolben-Zylinder-Einheit 10 betätigt wird.

Damit jetzt unterschiedlich schwere Werkzeuge 8 durch die Vorrichtung 3 ein- bzw. ausgewechselt werden können, ist an der Kolben-Zylinder-Einheit 10 eine Art Dämpfungsvorrichtung ausgebildet, die ein gezieltes Abbremsen des sich bewegenden Kolbens ermöglicht, so daß auch schwere Werkzeuge 8 bei Annäherung an ihre Endlage in ihrer Bewegung entsprechend bedämpft werden, ohne daß es zu harten Stößen oder zu Prellen kommt.

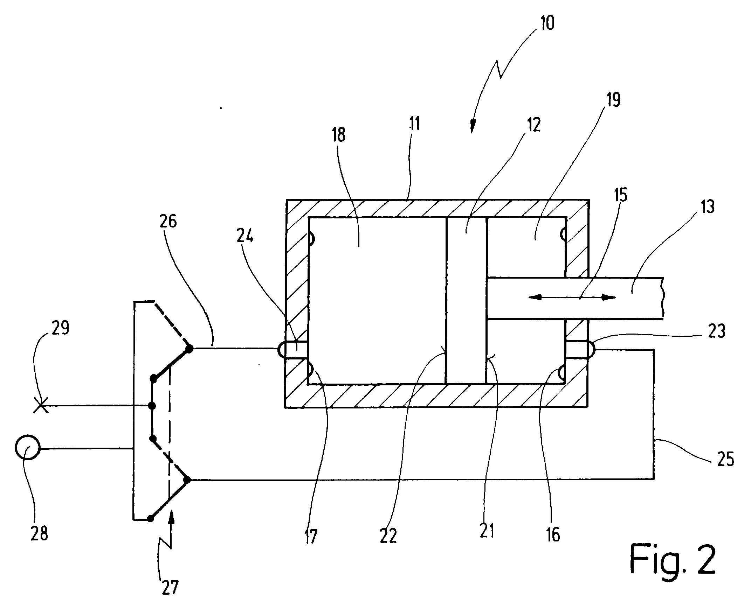

In Fig. 2 ist die Kolben-Zylinder-Einheit 10 in einem ersten Ausführungsbeispiel schematisch und im Schnitt dargestellt. Dort sind zunächst zwei Endanschläge 16, 17 gezeigt, durch die der Hub 15 des Kolbens 12 entsprechend begrenzt wird.

Zwischen dem Kolben 12 und dem Endanschlag 17 ist eine erste Druckkammer 18 ausgebildet, während zwischen dem Kolben 12 und dem Endanschlag 16 eine zweite Druckkammer 19 vorhanden ist. Der Kolben 12 zeigt mit seinen gegenüberliegenden Stirnseiten 21 und 22 auf die Druckkammern 19 bzw. 18 zu, deren Volumen sich beim Verschieben des Kolbens 12 entsprechend verändert.

In die Druckkammer 19 führt ein Ein- und Auslaß 23, während in die Druckkammer 18 ein Ein- und Auslaß 24 führt. Die Ein- und Auslässe 23, 24 sind über Fluidleitungen 25, 26 mit einer Umschaltvorrichtung 27 verbunden, über die die Fluidleitungen 25, 26 abwechselnd und wahlweise mit einer Mediumsquelle 28 bzw. einem Ventil 29 verbindbar sind.

In der in Fig. 2 gezeigten Schaltstellung der Umschaltvorrichtung 27 speist die Mediumsquelle 28 über die Fluidleitung 25 Betätigungsmedium durch den Ein- und Auslaß 23 in die Druckkammer 19, wo die Stirnseite 21 des Kolbens 12 mit dem Betätigungsmedium beaufschlagt wird. Durch diese Beaufschlagung wird der Kolben 12 in Fig. 2 nach links bewegt, wodurch das Volumen der linken Druckkammer 18 allmählich reduziert wird.

Da auch die Druckkammer 18 von einem vorherigen Hub des Kolbens 12 in Fig. 2 nach rechts mit Betätigungsmedium gefüllt ist, entweicht dieses Betätigungsmedium jetzt über den Ein- und Auslaß 24 sowie die nachgeschaltete Fluidleitung 26 durch die Umschaltvorrichtung 27 aus dem Ventil 29.

Um jetzt den Kolben 12 in seiner Bewegung bei der Annäherung des Anschlages 17 gezielt abzubremsen, also zu bedämpfen, ist das Ventil 29 als Drosselventil ausgebildet, das entweder einen konstanten Drosselquerschnitt aufweist, bei Erreichen eines bestimmten Druckes in der Druckkammer 18 oder bei Erreichen einer bestimmten Stellung des Kolbens 12 öffnet.

Auf diese Weise wird in der Druckkammer 18 ein gesteuerter Gegendruck aufgebaut, der den Kolben 12 gezielt abbremst, bzw. seine Bewegung derart bedämpft, daß der Kolben 12 bei Erreichen des Anschlages 17 und damit das Werkzeug 8 "sanft abgefangen" wird.

Selbst bei sehr hohen Vorschubgeschwindigkeiten des Kolbens 12 in Fig. 2 nach links wird durch den gesteuert aufgebauten Gegendruck in der Druckkammer 18 dafür gesorgt, daß der Kolben 12 relativ stoß- und prellfrei an dem Endanschlag 17 abgebremst wird.

Wenn die Umschaltvorrichtung 27 jetzt umschaltet, und die Fluidleitung 26 mit der Mediumsquelle 28 sowie die Fluidleitung 25 mit dem Ventil 29 verbindet, so wird der Kolben 12 in Fig. 2 nach rechts bewegt, wobei jetzt in der Druckkammer 19 ein gesteuerter Gegendruck zum gezielten Abbremsen des sich bewegenden Kolbens 12 aufgebaut wird, wie dies oben bereits beschrieben wurde.

Mit der Kolben-Zylinder-Einheit 10 aus Fig. 2 ist es jetzt möglich, einen sehr schnellen Hub 15 auf die Vorrichtung 14 zu übertragen und auch große Massen in der Vorrichtung 14 schnell zu bewegen. Die Geschwindigkeit der Durchführung des Hubes 15 ist hier deshalb möglich, weil in der jeweils nicht für den Hub benötigten Druckkammer 18, 19 der erwähnte gesteuerte Gegendruck zum gezielten Abbremsen aufgebaut wird. Bei dem Aufbau dieses Gegendruckes kann nicht nur die Masse des Kolbens 12, sondern auch das bewegte Werkzeug 8 mit berücksichtigt werden, um für ein schnelles, stoß- und prellfreies Verschieben dieser trägen Masse zu sorgen.

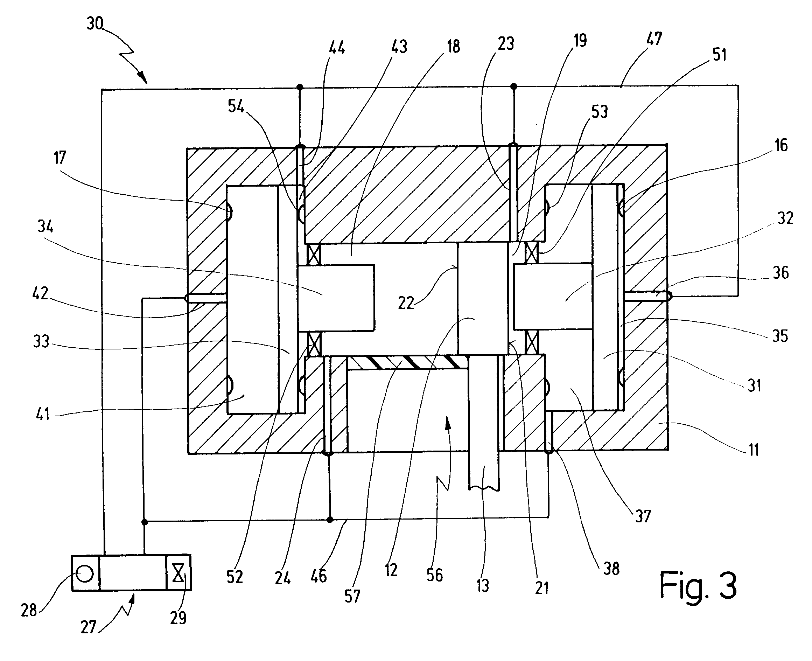

In Fig. 3 ist in einem weiteren Ausführungsbeispiel eine Kolben-Zylinder-Einheit 30 gezeigt, die ein noch schnelleres Verschieben des Kolbens 12 ermöglicht.

Zu diesem Zweck ist dem Kolben 12 ein erster Hilfskolben 31 zugeordnet, dessen Kolbenstange 32 in bestimmten Betriebszuständen in Anlage mit der Stirnseite 21 des Kolbens 12 gelangt.

Ferner ist ein dem Hilfskolben 31 gegenüberliegender Hilfskolben 33 vorgesehen, der mit seiner Kolbenstange 34 zumindest zeitweise in Anlage mit der anderen Stirnseite 22 des Kolbens 12 gelangt.

Die beiden Hilfskolben 31 und 33 sind beide doppeltmediumsbetätigte Kolben. Der Hilfskolben 31 wird durch eine Druckkammer 35 mit zugeordnetem Ein- und Auslaß 36 in Fig. 3 nach links sowie durch eine Druckkammer 37 mit zugeordnetem Ein- und Auslaß 38 in Fig. 3 nach rechts bewegt, wenn der entsprechende Ein- und Auslaß 36 bzw. 38 mit Betätigungsmedium beaufschlagt wird.

Entsprechend ist für den linken Hilfskolben 33 eine Druckkammer 41 mit zugeordnetem Ein- und Auslaß 42 sowie eine weitere Druckkammer 43 mit zugeordnetem Ein- und Auslaß 44 vorgesehen, über die der Hilfskolben 33 in Fig. 3 nach rechts bzw. nach links bewegt wird, wenn der Ein- und Auslaß 42 bzw. 44 mit Betätigungsmedium beaufschlagt wird.

Ferner sind in Fig. 3 noch die bereits aus Fig. 2 bekannten Druckkammern 18, 19 mit zugeordneten Ein- und Auslässen 24 bzw. 23 angedeutet, über die in Fig. 2 der Kolben 12 nach rechts bzw. nach links bewegt wird.

Die bereits aus Fig. 2 bekannte und in Fig. 3 lediglich noch schematisch angedeutete Umschaltvorrichtung 27 ist über eine erste Fluidleitung 46 mit den Druckkammern 41, 18, 37 verbunden, über die der Hilfskolben 33, der Kolben 12 sowie der Hilfskolben 31 in Fig. 3 nach rechts bewegt werden. Die entsprechenden Druckkammern 41, 18 und 37 sind also druckmäßig zusammengeschaltet. Gleiches gilt für die übrigen drei Druckkammern 43, 19 und 35, die ebenfalls druckmäßig zusammengeschaltet sind und über eine Fluidleitung 47 mit der Umschaltvorrichtung 27 verbunden sind.

Um die Druckkammern 19 und 37 bzw. 18 und 43 druckmäßig voneinander zu trennen, sind Dichtringe 51 und 52 vorgesehen, in denen die Kolbenstangen 32 bzw. 34 geführt sind.

Ferner sind in Fig. 3 noch Anschläge 53 und 54 zu erkennen, über die die Bewegung des Hilfskolben 31 nach links bzw. die Bewegung des Hilfskolbens 33 nach rechts begrenzt wird.

Es ist zu erkennen, daß die Hilfskolben 31 und 33 einen deutlich kürzeren Hub durchführen als der Kolben 12, an dem jetzt seitlich ein Abtriebsglied 13 angeordnet ist. Dieses Abtriebsglied 13 ist in einer Aussparung 56 des Gehäuses 11 hin- und herbewegbar, wobei eine nicht näher dargestellte Dichtvorrichtung 57 vorgesehen ist, über die die Druckkammern 18, 19 auch im Bereich des Abtriebsgliedes 13 nach außen abgedichtet sind.

In dem in Fig. 3 gezeigten Zustand befinden sich die beiden Hilfskolben 31 und 33 sowie der Kolben 12 in ihrer rechten Endlage.

Wird jetzt die Fluidleitung 47 über die Umschaltvorrichtung 27 mit der Mediumsquelle 28 verbunden, so wird zum einen der Hilfskolben 33 in Fig. 3 nach links bewegt, bis er in Anlage mit dem Endanschlag 17 gerät.

Auch der Hilfskolben 31 sowie der Kolben 12 werden in Fig. 3 nach links bewegt, wobei wegen der deutlich größeren Kolbenfläche des Hilfskolbens 31 dieser dem Kolben 12 eine höhere Anfangsbeschleunigung und Geschwindigkeit verleiht, als dies ohne Hilfskolben 31 der Fall wäre. Der Hilfskolben 31 gelangt jedoch nach einem kurzen Anfangshub in Anlage mit dem Endanschlag 53, wodurch der Hub des Hilfskolbens 31 beendet wird. Der sich jetzt relativ schnell in Fig. 3 nach links bewegende Kolben 12 wird über die Druckkammer 19 weiter nach links beschleunigt, wobei die Beschleunigungskraft jetzt jedoch deutlich verringert ist.

Während dieser Bewegung der Hilfskolben 31 und 33 sowie des Kolbens 12 in Fig. 3 nach links öffnet das Ventil 29 die zugeordneten Druckkammern 37, 41 und 18, so daß das dort befindliche Betätigungsmedium entweichen kann. Zu einem bestimmten Zeitpunkt des Hubes des Kolbens 12 in Fig. 3 nach links wird das Ventil 29 jedoch geschlossen, so daß sich insbesondere in der Druckkammer 18 ein gesteuerter Gegendruck aufbauen kann, über den der Kolben 12 gezielt abgebremst wird, wie dies bereits im Zusammenhang mit Fig. 2 ausführlich erläutert wurde. Selbstverständlich ist es möglich, daß das Ventil 29 auch hier wieder ein Drosselventil mit konstantem Drosselquerschnitt ist. Andererseits ist es natürlich auch wieder möglich, das Drosselventil so auszulegen, daß es bei einem bestimmten Gegendruck öffnet und die entsprechende Druckkammer entlüftet.

Bei einer Bewegung des Kolbens 12 in Fig. 3 nach rechts wird entsprechend die Fluidleitung 46 mit der Mediumsquelle 28 verbunden, während die Fluidleitung 47 über die Umschaltvorrichtung 27 mit dem Ventil 29 verbunden ist, so daß sich der oben beschriebene Vorgang in umgekehrter Weise abspielt.

Durch die beiden Hilfskolben 31 und 33 wird jetzt dem Kolben 12 und damit der von ihm bewegten trägen Masse aus der Vorrichtung 14 eine größere Anfangsgeschwindigkeit verliehen, so daß der gesamte Hub deutlich schneller abläuft, als es noch bei der Kolben-Zylinder-Einheit 10 aus Fig. 2 der Fall war. Da der jeweils nicht zum Vorschub des Kolbens 12 eingesetzte Hilfskolben 31 oder 33 über seine eigene Druckkammer 37 bzw. 43 bewegt wird, muß diese jeweilige Masse durch das System aus dem anderen Hilfskolben 31 oder 33 sowie dem Kolben 12 lediglich die eigene Masse sowie die träge Masse aus der Vorrichtung 14 bewegen, so daß auch dies noch einmal zu einer größeren Vorschubgeschwindigkeit führt. Über den gezielt aufgebauten Gegendruck in den Druckkammern 18 oder 19 wird auch bei sehr hohen Bewegungsenergien noch ein sanftes Abbremsen der bewegten Massen möglich, so daß sich dadurch insgesamt höhere Geschwindigkeiten und Beschleunigungen ergeben, mit denen auch größere träge Massen bewegt werden können, als dies bisher der Fall war.

In Abhängigkeit von den unterschiedlichen Hüben der Hilfskolben 31 und 33 einerseits sowie des Kolbens 12 andererseits ist es durchaus möglich, daß der Kolben 12 mit einer seiner Stirnseiten 21 oder 22 bereits mit der Kolbenstange 32 oder 34 in Anlage gelangt, bevor der entsprechende Hilfskolben 31 oder 33 in Anlage mit den Endanschlägen 16 oder 17 ist. In diesem Falle wirkt auch die Druckkammer 35 bzw. 41 zusätzlich bei der Abbremsung der bewegten Werkzeuge 8 mit, da sich auch dort dann ein gesteuerter Gegendruck aufbaut, weil ja die Entlüftung dieser Druckkammern auch über das Ventil 29 erfolgt.

## Patentansprüche

1. Werkzeugmaschine mit einer Vorrichtung (3), die durch eine Kolben-Zylinder-Einheit (10, 30) betätigbar ist, die einen einen durch Endanschläge (16, 17) begrenzten Hub (15) ausführenden, mediumsbetätigten Kolben (12) umfaßt, der mit einem Abtriebsglied (13) zur Übertragung des Hubes (15) auf die zu betätigende Vorrichtung (3) verbunden ist, dadurch gekennzeichnet, daß zumindest eine Dämpfungsvorrichtung vorgesehen ist, die einen Gegendruck zum gezielten Abbremsen des sich bewegenden Kolbens (12) aufbaut, so daß dieser bei Annäherung an zumindest einen der Endanschläge (16, 17) in seiner Bewegung bedämpft wird.

2. Werkzeugmaschine nach Anspruch 1, dadurch gekennzeichnet, daß der Gegendruck einen gesteuerten Druckverlauf aufweist.

3. Werkzeugmaschine nach Anspruch 1 oder Anspruch 2, dadurch gekennzeichnet, daß an der dem zumindest einen Endanschlag (16, 17) zugewandten Stirnseite (21, 22) des Kolbens (12) zumindest eine Druckkammer (19, 18) vorgesehen ist, die über ein Ventil (29) entlüftbar ist, das den gesteuerten Gegendruck erzeugt.

4. Werkzeugmaschine nach einem der Ansprüche 1 bis 3, dadurch gekennzeichnet, daß der Kolben (12) ein doppeltmediumsbetätigter Kolben (12) ist, an dessen beiden Stirnseiten (21, 22) jeweils eine Druckkammer (18, 19) angeordnet ist, die wahlweise und abwechselnd zum Vorschub bzw. zum Aufbau des gesteuerten Gegendruckes dienen.

5. Werkzeugmaschine nach Anspruch 4, dadurch gekennzeichnet, daß jede Druckkammer (19, 18) einen Ein- und Auslaß (23, 24) aufweist, der vorzugsweise über eine Umschaltvorrichtung (27) wahlweise mit einer Mediumsquelle (28) oder einem Ventil (29) zur Entlüftung/Entleerung der Druckkammer (19, 18) verbindbar ist.

6. Werkzeugmaschine nach einem der Ansprüche 1 bis 5, dadurch gekennzeichnet, daß zumindest ein Hilfskolben (31, 33) vorgesehen ist, der zu Beginn des Hubes (15) auf eine Stirnseite (21, 22) des Kolbens (12) einwirkt und einen kürzeren Hub als dieser durchführt.

7. Werkzeugmaschine nach Anspruch 4 und Anspruch 5 oder Anspruch 6, dadurch gekennzeichnet, daß zu beiden Seiten des Kolbens (12) jeweils ein Hilfskolben (31, 33) vorgesehen ist, dessen Kolbenstange (32, 34) mit einer zugeordneten Stirnseite (21, 22) des Kolbens (12) in Anlage bringbar ist.

8. Werkzeugmaschine nach Anspruch 6 oder Anspruch 7, dadurch gekennzeichnet, daß der Hilfskolben (31, 33) eine größere Kolbenfläche aufweist als der Kolben (12).

9. Werkzeugmaschine nach einem der Ansprüche 6 bis 8, dadurch gekennzeichnet, daß der Hilfskolben (31, 33) ein doppeltmediumsbetätigter Hilfskolben (31, 33) ist, an dessen beiden Stirnseiten jeweils eine Druckkammer (35, 37; 41, 43) vorgesehen ist, die wahlweise und abwechselnd zum Vorschub sowie vorzugsweise zum Aufbau eines gesteuerten Gegendruckes dient, um den Hilfskolben (31, 33) bei Annäherung an zumindest eine seiner Endlagen in seiner Bewegung zu bedämpfen.

10. Werkzeugmaschine nach Anspruch 9, dadurch gekennzeichnet, daß jede Druckkammer (18, 19, 35, 37, 41, 43) einen Ein- und Auslaß (24, 23, 36, 38, 42, 44) für das Betätigungsmedium aufweist und daß für Hin- und Rückhubrichtung jeweils die dem Vorschub dienenden Druckkammern (18, 41; 19, 35) von Kolben (12) und jeweiligem Hilfskolben (33, 31) sowie die dem Rückhub dienende Druckkammer (37; 43) des jeweils anderen Hilfskolbens (31, 33) druckmäßig miteinander verbunden sind.

11. Werkzeugmaschine nach Anspruch 10, dadurch gekennzeichnet, daß die druckmäßig miteinander verbundenen Druckkammern (41, 18, 37; 43, 19, 35) für Hinhub einerseits und Rückhub andererseits mit einer Umschaltvorrichtung (27) verbunden sind, die wahlweise und abwechselnd die einen Druckkammern (41, 18, 37; 43, 19, 35) mit einer Mediumsquelle (28) und die anderen mit einem Ventil (29) zur gesteuerten Entlüftung verbindet.

12. Werkzeugmaschine nach einem der Ansprüche 3 bis 11, dadurch gekennzeichnet, daß das Ventil (29) ein Drosselventil ist, das bei Erreichen eines Öffnungsdruckes die Druckkammer (41, 18, 37; 43, 19, 35) automatisch entlüftet.

13. Werkzeugmaschine nach einem der Ansprüche 3 bis 11, dadurch gekennzeichnet, daß das Ventil (29) ein Drosselventil ist, das mit konstantem Drosselquerschnitt arbeitet.

14. Werkzeugmaschine nach einem der Ansprüche 3 bis 11, dadurch gekennzeichnet, daß das Ventil (29) ein Drosselventil ist, das bei Erreichen einer bestimmten Stellung des Kolbens (12) die Druckkammer (41, 18, 37; 43, 19, 35) entlüftet.

15. Werkzeugmaschine nach einem der Ansprüche 1 bis 14, dadurch gekennzeichnet, daß die Vorrichtung (3) eine Werkzeugwechselvorrichtung ist, durch die Werkzeuge (8) zwischen einer Magazinstellung und einer Arbeitsstellung an einer Spindel überführbar sind.

16. Verfahren zum Betreiben oder Ansteuern einer Werkzeugmaschine mit einer Vorrichtung (3), die durch eine Kolben-Zylinder-Einheit (10, 30) betätigt wird, die einen einen durch Endanschläge (16, 17) begrenzten Hub (15) ausführenden, mediumsbetätigten Kolben (12) umfaßt, der mit einem Abtriebsglied (13) zur Übertragung des Hubes (15) auf die zu betätigende Vorrichtung (3) verbunden ist, mit den Schritten:
a) Beaufschlagen einer Stirnseite (21, 22) des Kolbens (12) mit einem Betätigungsmedium, so daß der Kolben (12) einen Hub (15) ausführt,
gekennzeichnet durch den weiteren Schritt:
b) Bedämpfen der Bewegung des Kolbens (12) bei dessen Annäherung an den jeweiligen Endanschlag (16, 17) durch Erzeugen eines Gegendruckes zum gezielten Abbremsen des sich bewegenden Kolbens (12).

17. Verfahren nach Anspruch 16, dadurch gekennzeichnet, daß im Schritt b) an der dem jeweiligen Endanschlag (16, 17) zugewandten Stirnseite (21, 22) des Kolbens (12) der Gegendruck zum gezielten Abbremsen gesteuert auf- und wieder abgebaut wird.

18. Verfahren nach Anspruch 17, dadurch gekennzeichnet, daß der Gegendruck bis zu einem bestimmten Wert aufgebaut wird, der beibehalten wird, bis der Kolben (12) den Endanschlag (16, 17) erreicht hat, und dann wieder abgebaut wird.
